(19) Europäisches Patentamt
European Patent Office
Office européen des brevets

(11) EP 4 790 783 A2

(12) EUROPEAN PATENT APPLICATION

(43) Date of publication:
**12.08.2026 Bulletin 2026/33**

(21) Application number: **26187352.5**

(22) Date of filing: **06.06.2025**

(51) International Patent Classification (IPC):
***H01M 10/0525*** *(2010.01)*

(52) Cooperative Patent Classification (CPC):
**C08B 11/12; C08L 1/286; H01M 4/13; H01M 4/622;**
H01M 10/0525; H01M 2004/027; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.06.2024 KR 20240075105**

(62) Document number(s) of the earlier application(s) in accordance with Art. 76 EPC:
**25181371.3 / 4 663 664**

(71) Applicant: **SAMSUNG SDI CO., LTD.**
**Yongin-si, Gyeonggi-do 17084 (KR)**

(72) Inventors:
- **CHO, Minho**
  **17084 Gyeonggi-do (KR)**
- **CHO, Yunshik**
  **17084 Gyeonggi-do (KR)**
- **JUNG, Kyunghwa**
  **17084 Gyeonggi-do (KR)**
- **LEE, Kukjoo**
  **17084 Gyeonggi-do (KR)**
- **CHOI, Jewon**
  **17084 Gyeonggi-do (KR)**
- **PARK, Sujin**
  **17084 Gyeonggi-do (KR)**

(74) Representative: **Michalski Hüttermann & Partner mbB**
**Kaistraße 16A**
**40221 Düsseldorf (DE)**

Remarks:
This application was filed on 24-06-2026 as a divisional application to the application mentioned under INID code 62.

# (54) LITHIUM SALT OF CARBOXYMETHYL CELLULOSE, MANUFACTURING METHOD OF THE SAME, NEGATIVE ELECTRODE, AND RECHARGEABLE LITHIUM BATTERY INCLUDING THE SAME

(57) Disclosed are a carboxylmethyl cellulose lithium salt, a method of manufacturing the carboxylmethyl cellulose lithium salt, a negative electrode including the carboxylmethyl cellulose lithium salt, and a rechargeable lithium battery. The method of manufacturing a carboxylmethyl cellulose lithium salt includes performing an alkalization reaction of cellulose and lithium hydroxide, performing an etherification reaction with a halogen-containing acetic acid or a salt thereof, wherein an amine derivative is added during the alkalization reaction or the etherification reaction, and an amount of the halogen-containing acetic acid or a salt thereof added relative to the lithium hydroxide is controlled to a given amount.

FIG. 1

100
60
30
40
10
30
20
50



Processed by Luminess, 75001 PARIS (FR)

## Description

## BACKGROUND

### 1. Field

The present disclosure relates to a carboxymethyl cellulose lithium salt, a method for manufacturing the carboxymethyl cellulose lithium salt, a negative electrode including the carboxymethyl cellulose lithium salt, and a rechargeable lithium battery.

### 2. Description of the Related Art

With increasing reliance on electronic devices that use batteries, such as, e.g. mobile phones, laptop computers, electric vehicles, and the like, the demand for small, lightweight, and relatively high-capacity rechargeable batteries is increasing. In particular, rechargeable lithium batteries are attracting attention as a power source for portable devices because the rechargeable lithium batteries are lightweight and have high energy density.

Carboxymethyl cellulose is one of the representative polymers typically used in rechargeable lithium batteries to increase viscosity. Carboxymethyl cellulose is usually in the form of an "alkali salt,' and among alkali salts, carboxymethyl cellulose 'sodium salt,' which is suitable for aqueous electrolyte solutions, is often used. However, because carboxymethyl cellulose 'sodium salt' can cause electrochemical side reactions in rechargeable lithium batteries, it may be advantageous to use carboxymethyl cellulose 'lithium salt' instead of carboxymethyl cellulose 'sodium salt.'

However, the manufacturing process of 'lithium salt' of carboxymethyl cellulose known to date has the disadvantages of low reaction efficiency, low physical properties of the final material, and/or low yield when using a strong acid such as hydrochloric acid.

## SUMMARY

Some example embodiments include a method for obtaining a carboxymethyl cellulose lithium salt having desired or improved physical properties by using a simple and efficient process.

Some example embodiments include a method of manufacturing a carboxylmethyl cellulose lithium salt that includes performing an alkalization reaction of cellulose and performing an etherification reaction with a halogen-containing acetic acid or a salt thereof, an amine derivative is added during the alkalization reaction or the etherification reaction, wherein an amount of the halogen-containing acetic acid or a salt thereof added to the lithium hydroxide is controlled to a given amount.

Some example embodiments include a carboxymethyl cellulose lithium salt, wherein the number of microgels in a film including the carboxymethyl cellulose lithium salt is controlled to a given amount.

Some example embodiments include a rechargeable lithium battery including a negative electrode including the carboxymethyl cellulose lithium salt, a positive electrode, and an electrolyte.

The method for manufacturing the carboxymethyl cellulose lithium salt of some example embodiments may include manufacturing a carboxymethyl cellulose lithium salt having desired or improved physical properties using a simple but efficient process.

## BRIEF DESCRIPTION OF THE DRAWINGS

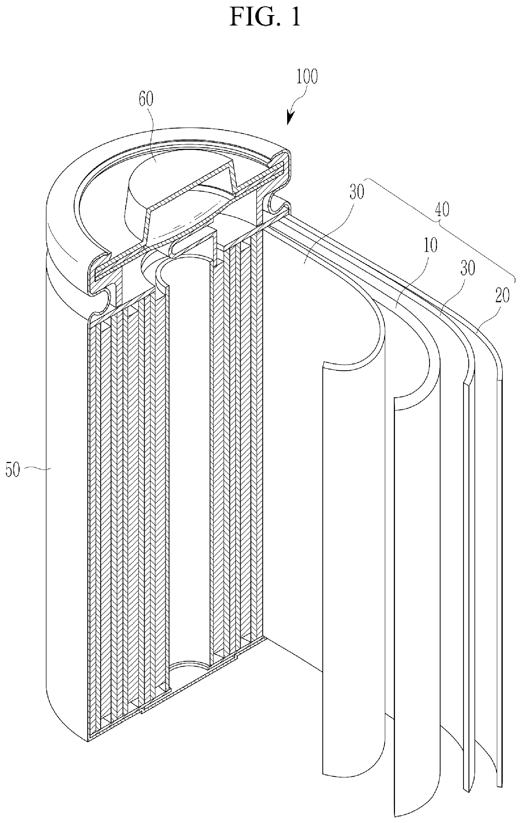

FIGS. 1 to 4 are schematic drawings illustrating rechargeable lithium batteries, according to some example embodiments.

## DETAILED DESCRIPTION

Hereinafter, example embodiments will be described in detail. However, these embodiments are examples, the present disclosure is not limited thereto and the present disclosure is defined by the scope of claims.

"Combination of these" refers to a mixture, laminate, composite, copolymer, alloy, blend, reaction product, etc. of the constituents.

It should be understood that terms such as "comprises," "includes," or "have" are intended to designate the presence of an embodied feature, number, step, element, or a combination thereof, but does not preclude the possibility of the presence or addition of one or more other features, number, step, element, or a combination thereof.

Throughout this specification, whenever it is said that a part "includes" a component, this does not exclude other components, but rather includes other components, unless otherwise specifically stated.

In addition, the terms "about," "substantially," etc., used throughout the specification of this application, are used in the sense that they are numerical or close to numerical values when manufacturing and material tolerances inherent in the meanings stated are presented. When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.
Throughout this specification, references to "A and/or B" mean "A or B or both."
As used herein, when a definition is not otherwise provided, the particle diameter means an average particle diameter (D50), which is a diameter of particles with a cumulative volume of 50 volume% in the particle size distribution. The average particle diameter (D50) can be measured by methods well known to those skilled in the art, for example, by measuring with a particle size analyzer, a transmission electron microscope or scanning electron microscope, or a scanning electron microscope. Alternatively, a dynamic light-scattering measurement device is used to perform a data analysis, and the number of particles is counted for each particle size range. From this, the average particle diameter (D50) value may be easily obtained through a calculation.

**Method of Manufacturing Carboxylmethyl Cellulose Lithium Salt**

In general, a process of manufacturing a carboxylmethyl cellulose 'sodium salt' is known by dispersing cellulose and 'sodium hydroxide' in an alcohol-based solvent, such as a mixture of ethanol and water, to proceed with an alkalization reaction, and subsequently performing an etherification reaction with halogen-containing acetic acid or a salt thereof.
From the process, it is possible to examine a process of substituting 'lithium hydroxide' for 'sodium hydroxide' in order to manufacture the carboxylmethyl cellulose 'lithium salt.'
However, because 'lithium hydroxide' has low solubility for the alcohol-based solvent, the alkalization reaction of the cellulose and the 'lithium hydroxide' may have a low yield, and almost no etherification reaction may occur, which may result in deteriorating properties of a final material and/or lowering a yield thereof.
Accordingly, a currently known process of manufacturing the carboxylmethyl cellulose 'lithium salt' is to manufacture a carboxylmethyl cellulose sodium salt, and subsequently treat the carboxylmethyl cellulose sodium salt with a strong acid such as hydrochloric acid, and react the carboxylmethyl cellulose sodium salt with lithium hydroxide.
This method has disadvantages of low reaction efficiency, while using strong acids such as hydrochloric acid, inferior properties of a final material, and/or a low yield thereof may occur.
In contrast, some example embodiments include a method of manufacturing a carboxylmethyl cellulose lithium salt, the method including performing an etherification reaction with a halogen-containing acetic acid or a salt thereof after an alkalization reaction of cellulose and lithium hydroxide, wherein (1) an amine derivative is added during the alkalization reaction operation or the etherification reaction operation, and (2) the amount of the halogen-containing acetic acid or a salt thereof added relative to the lithium hydroxide is controlled to a given amount.

(1) Because an amine derivative is added to the alkalization reaction operation or the etherification reaction operation, the process of preparing a carboxylmethyl cellulose sodium salt and the process of reacting the carboxylmethyl cellulose sodium salt with strong acids may be omitted.

The amine derivative may play a role of a catalyst in the alkalization reaction operation or the etherification reaction operation to obtain the carboxylmethyl cellulose lithium salt, which may make it possible to obtain the carboxylmethyl cellulose lithium salt through a simple and efficient process.
(2) Furthermore, an amount of the halogen-containing acetic acid or a salt thereof to the amount of the lithium hydroxide may be controlled within a given range, so that the number of microgels and a degree of lithium substitution may be controlled to each given range to obtain a carboxylmethyl cellulose lithium salt with desired or improved properties.
Hereinafter, a method for manufacturing a carboxymethyl cellulose lithium salt according to some example embodiments is described in more detail.

Amine Derivative

In some example embodiments, an amine derivative may be added to the alkalization reaction operation or the etherification reaction operation.
The amine derivative, when used in the alkalization reaction operation or the etherification reaction operation, may facilitate the alkalization reaction or the etherification reaction to provide a carboxylmethyl cellulose lithium salt with desired or improved properties at a higher yield.
For example, the alkalization reaction may be performed by mixing cellulose and lithium hydroxide with the amine derivative. Alternatively, a product of the alkalization reaction may be mixed with halogen-containing acetic acid or a salt thereof to proceed with the etherification reaction.

Herein, the amine derivative, when added in the alkalization reaction operation, may improve the efficiency of the entire process of the alkalization reaction operation and the etherification reaction operation.

In some example embodiments, the amine derivative may be represented by Chemical Formula 1 or 2:

Chemical Formula 1:

$$R^1{-}N(R^3){-}R^2$$

In Chemical Formula 1, $R^1$, $R^2$, and $R^3$ are the same or different, and hydrogen, or a C1 to C12 alkyl group.

Chemical Formula 2:

$$R^4{-}N(R^5){-}\left[W^1{-}N(R^7){-}R^6\right]_a{-}W^2{-}N(R^9){-}R^8$$

In Chemical Formula 2, $R^4$, $R^5$, $R^6$, $R^7$, $R^8$, and $R^9$ may be the same or different, and may be hydrogen, or a C1 to C12 alkyl group; $W^1$ and $W^2$ may be the same or different, and may be or include a C1 to C12 alkyl group; and "a" may be an integer in a range of 0 to 2.

In Chemical Formulas 1 and 2, the alkyl group may be linear, branched, or cyclic.

For example, at least one of $R^1$ to $R^9$ may be or include a C1 to C12 alkyl group, or $R^1$ to $R^9$ may be the same or different, and all may be C1 to C12 alkyl groups. In this case, the amine derivative can have a more appropriate basicity for manufacturing carboxymethyl cellulose lithium salt, so that side reactions in the reaction may be reduced or suppressed more effectively.

In some example embodiments, the alkyl group may have a carbon number of C1 to C4.

The amine derivative according to some example embodiments may be or include at least one of dimethylamine, diethylamine, trimethylamine, triethylamine, chloroalkyl amine, bromoalkyl amine, bis(chloro alkyl)amine, tris(chloro alkyl)amine, ethylene diamine, diethylene triamine, triethylene tetraamine, or a combination thereof. In the bis(chloroalkyl) amine, tris(chloroalkyl)amine, alkyl may be or include at least one of methyl, alkyl, propyl, or butyl.

Alkalinization Reaction of Cellulose and Lithium Hydroxide

In some example embodiments, in order to prepare a carboxylmethyl cellulose lithium salt, an alkalization reaction of cellulose and lithium hydroxide may be performed.

In the alkalization reaction, the cellulose and the lithium hydroxide may be mixed through physical mixing, an ultrasonic treatment, or a combination thereof.

The alkalization reaction may be performed in a solvent. The solvent may be or include water, alcohol, or a combination thereof, and the alcohol may be or include at least one of ethanol, isopropyl alcohol, methanol, butanol, or a combination thereof.

Herein, an amount of the cellulose may be controlled within a range of ≥ 0.5 parts by weight to ≤ 2 parts by weight based on 1 part by weight of the lithium hydroxide. When an amount of the cellulose to that of the lithium hydroxide is within the above range, the alkalization reaction may be facilitated, obtaining a carboxylmethyl cellulose lithium salt with desired or improved properties at a higher yield.

Etherification Reaction

Subsequently, a product obtained from the alkalization reaction may be mixed with halogen-containing acetic acid, or a salt thereof, to proceed with an etherification reaction.

The halogen-containing acetic acid used in the etherification reaction may be or include at least one of chloroacetic acid, fluoro acetic acid, bromo acetic acid, iodo acetic acid, or a combination thereof. In addition, the salt of the halogen-containing acetic acid may be or include a lithium salt of the listed halogen-containing acetic acids.

Herein, an amount of the halogen-containing acetic acid may be controlled to be ≥1.5 parts by weight to ≤ 3 parts by weight based on 1 parts by weight of the lithium hydroxide. Within this range, the etherification reaction may be facilitated to manufacture a lithium salt of carboxylmethyl cellulose having desired or improved properties at a high yield.

**Carboxylmethyl Cellulose Lithium Salt:**

Some example embodiments include a carboxylmethyl cellulose lithium salt, wherein a film including the carboxylmethyl cellulose lithium salt is controlled to have the number of microgels to a given amount.

Such a carboxylmethyl cellulose lithium salt may usefully be a negative electrode thickener of a rechargeable lithium battery.

A method of measuring the number of microgels in the film including the carboxylmethyl cellulose lithium salt is as follows, wherein the microgels refer to a gel-like substance composed of the carboxylmethyl cellulose lithium salt and having a spherical shape, when observed with the naked eye, also referred to herein as visually observed.

A carboxymethyl cellulose lithium salt aqueous solution including 1 wt% of the carboxylmethyl cellulose lithium salt and 99 wt% of water ($H_2O$) is prepared.

A grid of 5 cm x 5 cm (width x height) is drawn on a glass substrate, the glass substrate is turn over and 3 mL of the carboxymethyl cellulose lithium salt aqueous solution is dropped onto it

3 mL of the carboxymethyl cellulose lithium salt aqueous solution is coated to a thickness of 100 μm using an applicator, and then the number of microgels observed with the naked eye, or visually observed, within a grid of 5 cm x 5 cm (width x height) on the glass substrate may be greater than 0 and less than or equal to 50.

In order to satisfy this range, carboxymethyl cellulose lithium salt may be manufactured according to the manufacturing method of the above-described example embodiment.

Hereinafter, descriptions overlapping with those described above will be omitted, and a carboxymethyl cellulose lithium salt of some example embodiments will be described in detail.

Number of Microgels

A film including the carboxylmethyl cellulose lithium salt of some example embodiments may have a number of microgels greater than 0 and less than or equal to 50, less than or equal to 40, or less than or equal to 30. When the number of microgels is within any of the above ranges, as the number of microgels is smaller, coating uniformity of a negative electrode plate may be improved.

On the contrary, when the number of microgels is outside of the above ranges, the coating uniformity of a negative electrode plate manufactured by applying the carboxylmethyl cellulose lithium salt as a negative electrode binder may be deteriorated.

Degree of Lithium Substitution

The carboxylmethyl cellulose lithium salt may have three or fewer - $CH_2COOLi$-type substituents per cellulose repeating unit, that is, one unit.

In this regard, the carboxylmethyl cellulose lithium salt may have a degree of lithium substitution (a degree of substitution, DS) of ≥ 0.90 to ≤ 1.50, ≥ 0.92 to ≤ 1.30, or 0.94 to ≤ 1.10.

Herein, the 'degree of lithium substitution' indicates the average number of substituents per one cellulose repeating unit included in 1 g of the carboxylmethyl cellulose lithium salt, and may be measured in the following titrimetric method.

1) 150 ml of 80% ethanol is added to a 250 ml beaker.
2) 10 ml of 70% $HNO_3$ is added to the beaker by using a pipette.
3) 1 g to 2 g of a carboxylmethyl cellulose (CMC) sample is added thereto, and stirred with a magnetic stirrer for 1 hour.
4) After allowing the beaker to stand for 10 to 20 minutes to settle precipitates, a supernatant is discarded.

(Supernatant : a solution present on top of the CMC precipitates)

5) 150 ml of 80% ethanol is added again thereto, and stirred for 30 to 40 minutes.
6) After allowing the beaker for 10 to 20 minutes, a supernatant is discarded.
7) While filtering the residue with an aspirator, a filtrate therefrom is washed by slowly adding 500 ml of 80% ethanol dropwise. In the last operation, a product therefrom is 1 to 2 times washed with 95% ethanol.
8) Because the sample on the wall of the filter is highly likely to be contaminated with acid like CMC-acid, the center portion thereof is taken and placed in a clean watch plate.
9) Drying in a dry oven at 70 °C for 20 minutes, and cooling at room temperature for 15 to 20 minutes are performed.
10) 100 ml of distilled water is added to a 250 ml beaker, and 25 ml of 0.1 N NaOH is added thereto with a pipette.

11) The sample is weighed by 0.2 g without any loss and moisture absorption of the sample, and subsequently slowly added to the beaker. (0.2 g ± 0.05)
12) CMC is dissolved by using a magnetic stirrer until the CMC becomes transparent (40 to 60 minutes).
13) When the sample is completely dissolved, 1% phenolphthalein is added thereto by 2 to 3 drops.
14) While continuously stirring, titration with 0.1 N $H_2SO_4$ is performed.
15) When the titration is completed, the solution is changed from red to transparent, at which point the amount of 0.1 N $H_2SO_4$ that is consumed is recorded.
16) The DS value is calculated according to Equations 1 and 2 below.

A = (CMC - mmole number of acid)/(weight (g) of dried sample) = CMC Acid mmole number per 1 g of dried sample     Equation 1:

B (DS value) = (162×A)/(10,000 - 58×A) = (162×(NaOH amount - $H_2SO_4$ consumption) = weight (g) of dried sample)/(10,000-58×(NaOH amount - $H_2SO_4$ consumption)÷weight (g) of dried sample)     Equation 2:

Weight Average Molecular Weight

The carboxylmethyl cellulose lithium salt has a weight average molecular weight (Mw) of ≥ 10,000 g/mol to ≤ 5,000,000 g/mol or ≥ 100,000 g/mol to ≤ 3,000,000 g/mol. When the carboxylmethyl cellulose lithium salt has a weight average molecular weight (Mw) within any of the above ranges, a slurry type composition for manufacturing a negative electrode may have appropriate viscosity, which may improve processability.

Viscosity

A carboxymethyl cellulose lithium salt aqueous solution including 1 wt% of the carboxylmethyl cellulose lithium salt within a temperature range of ≥ 20 °C to ≤ 25 °C may exhibit viscosity of ≥ 10 mPas to ≤ 7,000 mPas, or ≥ 100 mPas to ≤ 5,000 mPas.

**Rechargeable Lithium Battery:**

Some example embodiments include a rechargeable lithium battery including a negative electrode including a carboxymethyl cellulose lithium salt of the aforementioned example embodiment, a positive electrode, and an electrolyte.

When the carboxymethyl cellulose lithium salt of the above-described example embodiment is used, a suitable viscosity can be exhibited, and processability can be exhibited when preparing a slurry type composition for manufacturing a negative electrode. Accordingly, a rechargeable lithium battery of some example embodiments may be manufactured by an efficient process.

Negative Electrode Active Material

The negative electrode active material may be or include at least one of a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon-based negative electrode active material, for example, crystalline carbon, amorphous carbon or a combination thereof. The crystalline carbon may be graphite such as non-shaped, plate-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy may include lithium and a metal including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x < 2$), a Si-Q alloy (wherein Q includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to

some example embodiments, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be combined with a carbon-based negative electrode active material.

Negative Electrode

A negative electrode for a rechargeable lithium battery includes a current collector and a negative electrode active material layer on the current collector. The negative electrode active material layer includes a negative electrode active material and may further include a binder and/or a conductive material.

For example, the negative electrode active material layer may include ≥ 90 wt% to ≤ 99 wt% of the negative electrode active material, ≥ 0.5 wt% to ≤ 5 wt% of the binder, and ≥ 0.5 wt% to ≤ 5 wt% of the conductive material.

According to some example embodiments, a carboxymethyl cellulose lithium salt may be included in the negative electrode active material layer. In this case, the carboxymethyl cellulose lithium salt may be included in an amount of ≥ 0.5 wt% to ≤ 3 wt% based on 100 wt% of a total negative electrode active material layer.

The binder may be configured to attach the negative electrode active material particles to each other and also to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is the negative electrode binder, the aqueous binder may further include a cellulose-based compound capable of imparting viscosity. The cellulose-based compound includes one or more of carboxylmethyl cellulose, hydroxypropylmethyl cellulose, methyl cellulose, or alkali metal salts thereof. The alkali metal may be or include at least one of Na, K, or Li.

The dry binder may be or include a polymer material capable of being fiberized, and may be or include, for example, at least one of polytetrafluoroethylene, polyvinylidene fluoride, polyvinylidene fluoride-hexafluoropropylene copolymer, polyethylene oxide, or a combination thereof.

The conductive material may be included to provide electrode conductivity, and any electrically conductive material may be a conductive material unless the electrically conductive material causes a chemical change. Examples of the conductive material may be or include a carbon-based material such as at least one of natural graphite, artificial graphite, carbon black, acetylene black, ketjen black, a carbon fiber, a carbon nanofiber, a carbon nanotube, and the like; a metal-based material such as at least one of copper, nickel, aluminum silver, and the like in a form of a metal powder or a metal fiber; a conductive polymer such as a polyphenylene derivative; or a mixture thereof.

The negative electrode current collector may include one or more of a copper foil, a nickel foil, a stainless steel foil, a titanium foil, a nickel foam, a copper foam, a polymer substrate coated with a conductive metal, and a combination thereof, but is not limited thereto.

Positive Electrode Active Material

The positive electrode active material may be or include a compound (lithiated intercalation compound) capable of intercalating and deintercalating lithium. Specifically, one or more types of composite oxides of lithium and a metal including at least one of, manganese, nickel, and combinations thereof may be used.

The composite oxide may be or include a lithium transition metal composite oxide, and examples thereof may include at least one of lithium nickel-based oxide, lithium cobalt-based oxide, lithium manganese-based oxide, a lithium iron phosphate-based compound, cobalt-free lithium nickel-manganese-based oxide, or a combination thereof.

As an example, a compound represented by any of Chemical Formulas may be used. $Li_aA_{1-b}X_bO_{2-c}D_c$ ($0.90 \le a \le 1.8$, $0 \le b \le 0.5$, $0 \le c \le 0.05$); $Li_aMn_{2-b}X_bO_{4-c}D_c$ ($0.90 \le a \le 1.8$, $0 \le b \le 0.5$, $0 \le c \le 0.05$); $Li_aNi_{1-b-c}Co_bX_cO_{2-\alpha}O_\alpha$ ($0.90 \le a \le 1.8$, $0 \le b \le 0.5$, $0 \le c \le 0.5$, $0<\alpha<2$); $Li_aNi_{1-b-c}Mn_bX_cO_{2-\alpha}O_\alpha$ ($0.90 \le a \le 1.8$, $0 \le b \le 0.5$, $0 \le c \le 0.5$, $0<\alpha<2$); $Li_aNi_bCo_cL^1{}_{d-}G_eO_2$ ($0.90 \le a \le 1.8$, $0 \le b \le 0.9$, $0 \le c \le 0.5$, $0 \le d \le 0.5$, $0 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $Li_{(3-f)}Fe_2(PO_4)_3$ ($0 \le f \le 2$); $Li_aFePO_4$ ($0.90 \le a \le 1.8$).

In Chemical Formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: $Li_{a1}Ni_{x1}M^1{}_1M^2{}_{z1}O_{2-b1}X_{b1}$

In Chemical Formula 11, $0.9 \le a1 \le 1.8$, $0.3 \le x1 \le 1$, $0 \le y1 \le 0.7$, $0 \le z1 \le 0.7$, $0.9 \le x1+y1+z1 \le 1.1$, and $0 \le b1 \le 0.1$, $M^1$ and $M^2$ are independently one or more element including at least one of Al, B, Ba, Ca, Ce, Co, Cr, Cu, Fe, Mg, Mn, Mo, Nb, Si, Sn, Sr, Ti, V, W, and Zr, and X is or includes one or more element including at least one of F, P, and S.

In Chemical Formula 11, $0.6 \le x1 \le 1$, $0 \le y1 \le 0.4$, and $0 \le z1 \le 0.4$, or $0.8 \le x1 \le 1$, $0 \le y1 \le 0.2$, and $0 \le z1 \le 0.2$.

Chemical Formula 12: $Li_{a2}Co_{x2}M^3{}_{y2}O_{2-b2}X_{b2}$

In Chemical Formula 12, $0.9 \le a2 \le 1.8$, $0.7 \le x2 \le 1$, $0 \le y2 \le 0.3$, $0.9 \le x2+y2 \le 1.1$, and $0 \le b2 \le 0.1$, $M^3$ is or includes one or more element including at least one of Al, B, Ba, Ca, Ce, Cr, Cu, Fe, Mg, Mn, Mo, Ni, Se, Si, Sn, Sr, Ti, V, W, Y, Zn and Zr, and X is or includes one or more element including at least one of F, P, and S.

Chemical Formula 13: $Li_{a3}Fe_{x3}M^4{}_{y3}PO_{4-b3}X_{b3}$

In Chemical Formula 13, $0.9 \le a3 \le 1.8$, $0.6 \le x3 \le 1$, $0 \le y3 \le 0.4$, and $0 \le b3 \le 0.1$, $M^4$ is or includes one or more element including at least one of Al, B, Ba, Ca, Ce, Co, Cr, Cu, Mg, Mn, Mo, Ni, Se, Si, Sn, Sr, Ti, V, W, Y, Zn and Zr, and X is or includes one or more element including at least one of F, P, and S.

Chemical Formula 14: $Li_{a4}Ni_{x4}Mn_{y4}M^5{}_{z4}O_{2-b4}X_{b4}$

In Chemical Formula 14, $0.9 \le a4 \le 1.8$, $0.8 \le x4 < 1$, $0 < y4 \le 0.2$, $0 \le z4 \le 0.2$, $0.9 \le x4+y4+z4 \le 1.1$, and $0 \le b4 \le 0.1$, $M^5$ is one or more element including at least one of Al, B, Ba, Ca, Ce, Cr, Fe, Mg, Mo, Nb, Si, Sn, Sr, Ti, V, W, and Zr, and X is one or more element including at least one of F, P, and S.

As an example, the positive electrode active material may be or include a high nickel-based positive electrode active material having a nickel content greater than or equal to 80 mol%, greater than or equal to 85 mol%, greater than or equal to 90 mol%, greater than or equal to 91 mol%, or greater than or equal to 94 mol%, and less than or equal to 99 mol% based on 100 mol% of metals excluding lithium in the lithium transition metal composite oxide. The high nickel-based positive electrode active materials can achieve high capacity and can be applied to a high-capacity, high-density rechargeable lithium battery.

Positive Electrode

The positive electrode for a rechargeable lithium battery may include a current collector and a positive electrode active material layer on the current collector. The positive electrode active material layer may include a positive electrode active material, and may further include a binder and/or a conductive material.

For example, the positive electrode may further include an additive that can function as a sacrificial positive electrode.

A content of the positive electrode active material may be ≥ 90 wt% to ≤ 99.5 wt%, and a content of the binder and the conductive material may be ≥ 0.5 wt% to ≤ 5 wt%, respectively based on 100 wt% of the positive electrode active material layer.

The binder is configured to attach the positive electrode active material particles to each other, and also to attach the positive electrode active material to the current collector. Examples of the binder may include at least one of polyvinyl

alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may be configured to impart conductivity (e.g., electrical conductivity) to the electrode. Any material that does not cause chemical change (e.g., that does not cause an undesirable chemical change in the rechargeable lithium battery), and that conducts electrons, may be used in the battery. Examples of the conductive material may include a carbon-based material such as or including at least one of natural graphite, artificial graphite, carbon black, acetylene black, ketjen black, a carbon fiber, a carbon nanofiber, and carbon nanotube; a metal-based material including at least one of copper, nickel, aluminum, silver, etc., in a form of a metal powder or a metal fiber; a conductive polymer such as a polyphenylene derivative; or a mixture thereof.

The current collector may include Al, but is not limited thereto.

Electrolyte Solution

The electrolyte may be or include a solid electrolyte or a liquid electrolyte (i.e., an electrolyte solution).

The electrolyte solution for a rechargeable lithium battery includes a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, alcohol-based solvent, aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethylacetate, methylpropionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone. The alcohol-based solvent may include at least one of ethyl alcohol, isopropyl alcohol, and the like, and the aprotic solvent may include at least one of nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and the like.

The non-aqueous organic solvent may be used alone or in combination of two or more solvents.

Additionally, when using a carbonate-based solvent, cyclic carbonate and chain carbonate can be mixed and used, and cyclic carbonate and chain carbonate may be mixed at a volume ratio of 1:1 to 1:9.

The lithium salt dissolved in the organic solvent supplies lithium ions in a battery, enables a basic operation of a rechargeable lithium battery, and improves transportation of the lithium ions between positive and negative electrodes. Examples of a lithium salt may include one, or more than one, of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (x and y are integers from 1 to 20), lithium trifluoromethane sulfonate, lithium tetrafluoroethanesulfonate, lithium difluorobis(oxalato)phosphate, (LiDFOB), and lithium bis(oxalato)borate (LiBOB).

Separator

Depending on the type of rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/-polyethylene/polypropylene three-layer separator, and the like.

The separator may include a porous substrate and a coating layer including an organic material, an inorganic material, or a combination thereof on one or both surfaces of the porous substrate.

The porous substrate may be or include at least one of a polymer film formed of or including any one of a polymer, or a copolymer or mixture of two or more of polyolefin such as polyethylene or polypropylene, a polyester such as polyethyleneterephthalate, or polybutyleneterephthalate, polyacetal, polyamide, polyimide, polycarbonate, polyether ketone, polyaryl ether ketone, polyether imide, polyamideimide, polybenzimidazole, polyether sulfone, polyphenyleneoxide, a cyclic olefin copolymer, polyphenylenesulfide, polyethylenenaphthalate, a glass fiber, TEFLON (tetrafluoroethylene), and polytetrafluoroethylene.

The organic material may include a polyvinylidene fluoride-based polymer or a (meth)acrylic polymer.

The inorganic material may include inorganic particles including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

Rechargeable Lithium Battery

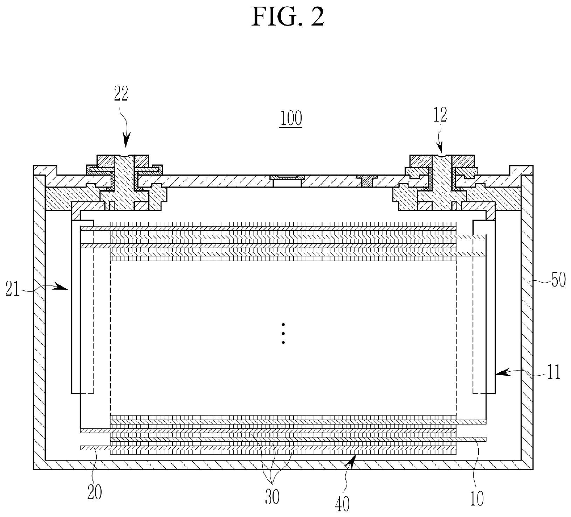

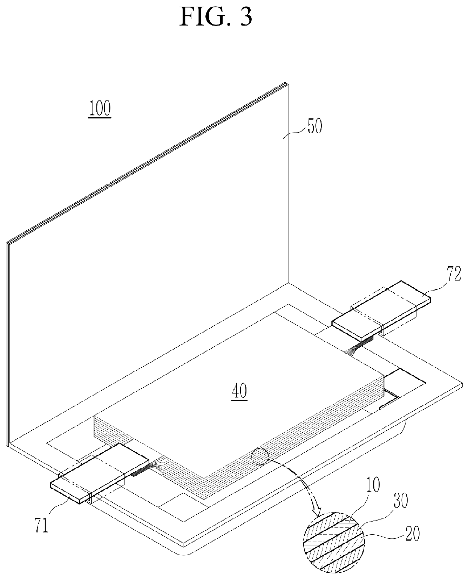

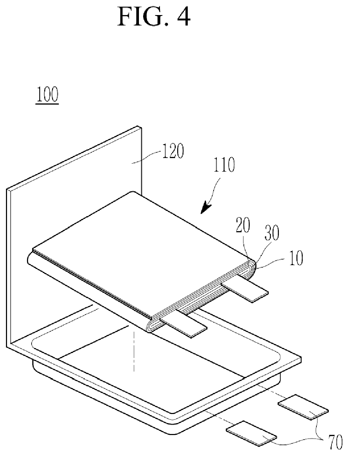

The rechargeable lithium battery may be classified into cylindrical, prismatic, pouch, or coin-type batteries, and the like depending on their shape. FIGS. 1 to 4 are schematic views illustrating a rechargeable lithium battery according to some example embodiments. FIG. 1 illustrates a cylindrical battery, FIG. 2 illustrates a prismatic battery, and FIGS. 3 and 4 illustrate pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 sealing the case 50, as shown in FIG. 1. In addition, in FIG. 2, the rechargeable lithium battery 100 may include a positive lead tab 11, a positive terminal 12, a negative lead tab 21, and a negative terminal 22. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the tabs 70/71/72 forming an electrical path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto.

Hereinafter, examples of the present disclosure and comparative examples are described. These examples, however, are not in any sense to be interpreted as limiting the scope of the disclosure.

**Examples and Comparative Examples**

**Example 1**

Cellulose and lithium hydroxide were mixed in water ($H_2O$) as a solvent by using a kneader and then, manufactured into an alkali product through an alkalization reaction.

After adding chloroacetic acid, triethylamine, and ethanol to the alkali product to perform an etherification reaction, an 80% ethanol solution was injected thereinto and then, filtered with a filter, which was three times in total repeated, and subsequently dried to manufacture a carboxylmethyl cellulose lithium salt.

In the process, the cellulose, the lithium hydroxide, and the chloroacetic acid were mixed in a weight ratio of 1:1:1.5, finally manufacturing the carboxylmethyl cellulose lithium salt with a lithium substitution degree of 0.93 and a microgel number of 32. The lithium substitution degree and the microgel number are equally defined and measured as described above.

**Example 2**

A carboxylmethyl cellulose lithium salt having a lithium substitution degree of 0.98 and a microgel number of 26 was prepared substantially in the same manner as in Example 1, with a difference that the weight ratio of cellulose, lithium hydroxide, and chloroacetic acid was changed to 1:1:2.

**Example 3**

A carboxylmethyl cellulose lithium salt having a lithium substitution degree of 0.94 and a microgel number of 28 was prepared substantially in the same manner as in Example 1, with a difference that the weight ratio of cellulose, lithium hydroxide, and chloroacetic acid was changed to 1:1:2.5.

**Example 4**

A carboxylmethyl cellulose lithium salt having a lithium substitution degree of 0.90 and a microgel number of 35 was prepared substantially in the same manner as in Example 1, with a difference that the weight ratio of cellulose, lithium hydroxide, and chloroacetic acid was changed to 1:1:3.

**Example 5**

A carboxylmethyl cellulose lithium salt having a lithium substitution degree of 0.96 and a microgel number of 25 was prepared substantially in the same manner as in Example 1, with a difference that the weight ratio of cellulose, lithium hydroxide, and chloroacetic acid was changed to 0.5:1:1.5.

**Example 6**

A carboxylmethyl cellulose lithium salt having a lithium substitution degree of 0.90 and a microgel number of 40 was prepared substantially in the same manner as in Example 1, with a difference that the weight ratio of cellulose, lithium hydroxide, and chloroacetic acid was changed to 2:1:1.5.

**Comparative Example 1**

A carboxylmethyl cellulose lithium salt having a lithium substitution degree of 0.80 and a microgel number of 100 or more was prepared substantially in the same manner as in Example 1, with a difference that the weight ratio of cellulose, lithium hydroxide, and chloroacetic acid was changed to 1:1:1.

**Comparative Example 2**

A carboxylmethyl cellulose lithium salt having a lithium substitution degree of 0.40 and a microgel number of 100 or more was prepared substantially in the same manner as in Example 1, with a difference that the weight ratio of cellulose, lithium hydroxide, and chloroacetic acid was changed to 1:1:3.5.

**Evaluation Examples**

**Evaluation Example** 1: **Properties of carboxymethyl cellulose lithium salt**

(1) Number of microgels

Each carboxylmethyl cellulose lithium salt according to the example and the comparative examples was measured with respect to the number of microgels, and the results are shown in Table1. Herein, the number of microgels is equally defined and measured as described above.

(2) Lithium substitution degree

Each carboxylmethyl cellulose lithium salt according to the examples and the comparative examples was measured with respect to a lithium substitution degree, and the results are shown in Table 1. Herein, the lithium substitution degree is equally defined and measured as described above. A lithium substitution degree per 1 g was measured through ICP (Inductively-coupled plasma) analysis, and the results are shown in Table 1.

Weight ratios of the reactants according to the examples and the comparative examples and properties of the products are summarized in Table 1.

Table 1:

| | Addition of amine derivative | Weight ratio of reactants | | | Properties of products | |
|---|---|---|---|---|---|---|
| | | Cellulose | Lithium hydroxide | Chloroacetic acid | The number of microgels (pcs) | Lithium substitution degree [%] |
| Example 1 | Etherification reaction | 1 | 1 | 1.5 | 32 | 0.93 |
| Example 2 | | 1 | 1 | 2.0 | 26 | 0.98 |
| Example 3 | | 1 | 1 | 2.5 | 28 | 0.94 |
| Example 4 | | 1 | 1 | 3.0 | 35 | 0.90 |
| Example 5 | | 0.5 | 1 | 1.5 | 25 | 0.96 |
| Example 6 | | 2 | 1 | 1.5 | 40 | 0.90 |

(continued)

| | Addition of amine derivative | Weight ratio of reactants | | | Properties of products | |
|---|---|---|---|---|---|---|
| | | Cellulose | Lithium hydroxide | Chloroacetic acid | The number of microgels (pcs) | Lithium substitution degree [%] |
| Comparative Example 1 | | 1 | 1 | 1.0 | ≥100 | 0.80 |
| Comparative Example 2 | | 1 | 1 | 3.5 | ≥100 | 0.40 |

Referring to Table 1, the method of manufacturing a carboxylmethyl cellulose lithium salt, which was represented by Examples 1 to 6, provided a carboxylmethyl cellulose lithium salt controlled to have the desired number of microgels and a desired degree of lithium substitution within each given range and thus achieve desired or improved properties.

While this disclosure has been described in connection with what is presently considered to be practical example embodiments, it is to be understood that the disclosure is not limited to the disclosed example embodiments, but, on the contrary, is intended to cover various modifications and equivalent arrangements included within the spirit and scope of the appended claims.

**Description of Symbols:**

100: rechargeable lithium battery 10: positive electrode
11: positive electrode lead tab 12: positive terminal
20: negative electrode 21: negative electrode lead tab
22: negative terminal 30: separator
40: electrode assembly 50: case
60: sealing member 70: electrode tab
71: positive electrode tab 72: negative electrode tab

**Claims**

1. A carboxylmethyl cellulose lithium salt,

    wherein a number of microgels in a film including the carboxymethyl cellulose lithium salt is greater than 0 and less than or equal to 50;
    the number of microgels is measured by:

        preparing a carboxymethyl cellulose lithium salt aqueous solution including 1 wt% of carboxymethyl cellulose lithium salt and 99 wt% of water ($H_2O$);
        drawing a grid of 5 cm x 5 cm (width x height) on a glass substrate, turning the glass substrate over and dropping 3 mL of the carboxymethyl cellulose lithium salt aqueous solution onto it;
        coating 3 mL of the carboxymethyl cellulose lithium salt aqueous solution to a thickness of 100 μm using an applicator, and visually observing the number of microgels within a grid of width*length=5 cm*5 cm on the glass substrate; and
        the microgel comprises a gel-like substance comprising carboxymethyl cellulose lithium salt and having a substantially spherical shape when visually observed.

2. The carboxylmethyl cellulose lithium salt as claimed in claim 1, wherein
the carboxymethyl cellulose lithium salt has a degree of lithium substitution of ≥ 0.90 to ≤ 1.50

3. A negative electrode (20) for a rechargeable lithium battery (100), the negative electrode (20) comprising the carboxymethyl cellulose lithium salt as claimed in claim 1 or 2.

4. The negative electrode (20) as claimed in claim 3, wherein:

the negative electrode (20) comprises a current collector and a negative electrode active material layer on the current collector, and
the carboxylmethyl cellulose lithium salt is included in the negative electrode active material layer.

**5.** The negative electrode (20) as claimed in claim 3 or 4, wherein the carboxymethyl cellulose lithium salt is included in an amount of ≥ 0.5 wt% to ≤ 3 wt% based on 100 wt% of the total negative electrode active material layer.

**6.** A rechargeable lithium battery (100), comprising:

the negative electrode (20) as claimed in any one of claims 3 to 5;
a positive electrode (10); and
an electrolyte.

FIG. 1

100
60
30
40
10
30
20
50

FIG. 2

22
100
12
21
50
11
20
30
40
10

FIG. 3

100
50
72
40
10
30
20
71

FIG. 4

100
120
110
20
30
10
70